(19) Europäisches Patentamt / European Patent Office / Office européen des brevets

(11) **EP 4 451 400 A1**

(12) **EUROPEAN PATENT APPLICATION**
published in accordance with Art. 153(4) EPC

(43) Date of publication:
**23.10.2024 Bulletin 2024/43**

(21) Application number: **23877645.4**

(22) Date of filing: **11.10.2023**

(51) International Patent Classification (IPC):
$H01M\ 10/052^{(2010.01)}$    $H01M\ 4/36^{(2006.01)}$
$H01M\ 4/48^{(2010.01)}$    $H01M\ 4/38^{(2006.01)}$
$H01M\ 4/587^{(2010.01)}$    $H01M\ 4/525^{(2010.01)}$
$H01M\ 4/505^{(2010.01)}$    $H01M\ 10/0567^{(2010.01)}$

(52) Cooperative Patent Classification (CPC):
**H01M 4/36; H01M 4/38; H01M 4/48; H01M 4/505;
H01M 4/525; H01M 4/587; H01M 10/052;
H01M 10/0567;** Y02E 60/10

(86) International application number:
**PCT/KR2023/015575**

(87) International publication number:
**WO 2024/080718 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 KR 20220131734**

(71) Applicant: **LG Energy Solution, Ltd.
Seoul 07335 (KR)**

(72) Inventors:
• **PARK, Kyutae**
  **Daejeon 34122 (KR)**
• **JUNG, Wonhee**
  **Daejeon 34122 (KR)**
• **KIM, Minsoo**
  **Daejeon 34122 (KR)**
• **KIM, Shulkee**
  **Daejeon 34122 (KR)**
• **PIAO, Lilin**
  **Daejeon 34122 (KR)**
• **BAEK, Sora**
  **Daejeon 34122 (KR)**
• **YOO, Kwang Ho**
  **Daejeon 34122 (KR)**
• **LEE, Gyeongseop**
  **Daejeon 34122 (KR)**

(74) Representative: **Plasseraud IP
104 Rue de Richelieu
CS92104
75080 Paris Cedex 02 (FR)**

(54) **LITHIUM SECONDARY BATTERY**

(57) The present invention relates to a lithium secondary battery comprising a cathode, a separator, an anode and an electrolyte, wherein the cathode comprises a lithium composite transition metal compound containing nickel (Ni) and cobalt (Co), the anode comprises a mixed anode active material of a silicon-based active material and a carbon-based active material, the electrolyte comprises fluoroethylene carbonate, and the efficiency constant of the mixed anode active material and the lithium composite transition metal compound and the parts by weight of the fluoroethylene carbonate satisfy a specific relation.

**EP 4 451 400 A1**

**Description**

[Technical Field]

This application claims priority to and the benefit of Korean Patent Application No. 10-2022-0131734 filed in the Korean Intellectual Property Office on October 13, 2022, the entire contents of which are incorporated herein by reference.

The present invention relates to a lithium secondary battery.

[Background Art]

Secondary batteries are universally applied not only to portable devices but also to electric vehicles (EVs) and hybrid electric vehicles (HEVs), which are driven by electric driving sources.

Since such a secondary battery has not only the primary advantage of being able to dramatically reduce the use of fossil fuels, but also the advantage of not generating any by-products caused by the use of energy, the secondary battery is attracting attention as a new energy source that is environmentally friendly and improves energy efficiency.

In general, a secondary battery includes a positive electrode, a negative electrode, a separator interposed between the positive electrode and the negative electrode, an electrolyte, and the like. Further, an electrode such as a positive electrode and a negative electrode may have an electrode active material layer provided on a current collector.

As the utilization of secondary batteries increases, various battery performances are required. Although attempts have been appropriately made to change the composition of the electrode active material layer in order to improve battery performance, some performance of the battery may be improved depending on the selection or combination of the material, but some performance may rather deteriorate. Therefore, there is a need for research on the selection or combination of materials suitable for the performance of a secondary battery to be improved.

[Detailed Description of the Invention]

[Technical Problem]

The present invention has been made in an effort to provide a lithium secondary battery that has a high energy density and excellent service life characteristics.

[Technical Solution]

An exemplary embodiment of the present invention provides a lithium secondary battery including

a positive electrode, a separator, a negative electrode, and an electrolyte,
in which the positive electrode includes a lithium composite transition metal compound comprising nickel (Ni) and cobalt (Co),
the negative electrode includes a mixed negative electrode active material of a silicon-based active material and a carbon-based active material,
the electrolyte includes fluoroethylene carbonate, and
when the efficiency constants of the mixed negative electrode active material and the lithium composite transition metal compound are a and b, respectively, and the part by weight of the fluoroethylene carbonate is c based on 100 parts by weight of the electrolyte, a, b, and c satisfy the following Equation 1:

$$[\text{Equation 1}]$$

$$[(b/a)*100 - c] \leq 95.$$

[Advantageous Effects]

According to exemplary embodiments described in the present specification, high energy density can be implemented by selecting materials having excellent efficiency in charging and discharging as active materials of a positive electrode and a negative electrode, and simultaneously, the efficiency balance of the positive electrode and the negative electrode can be made by adjusting the efficiency constant and the content of a specific electrolyte additive according to the type and mixing ratio of active material included in the positive electrode and the negative electrode such that the efficiency constant and the content of the specific electrolyte additive satisfy a specific equation, thereby improving the service life and quick charging performance of the battery. Specifically, fluoroethylene carbonate helps form a film that protects a silicon-based compound, and the suitable ratio of fluoroethylene carbonate works effectively when the deterioration in negative electrode is severe, according to the positive electrode/negative electrode efficiency balance. The larger the remaining amount of fluoroethylene carbonate, the more gas generation and cell deterioration will occur due to side reactions, so a suitable amount of fluoroethylene carbonate is required according to the positive electrode/negative electrode efficiency balance.

[Best Mode]

Hereinafter, the present invention will be described in more detail in order to help the understanding of the present invention. The present invention can be implemented in various different forms, and is not limited to the exemplary embodiments described herein. In this case, terms or words used in the specification and the claims should not be interpreted as being limited to typical or dictionary meanings, and should be interpreted with a meaning and a concept that are consistent with the technical spirit of the present invention based on the principle that an inventor can appropriately define a concept of a term in order to describe his/her own invention in the best way.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

In the present specification, the 'primary particles' mean particles having no grain boundaries in appearance when observed at a magnification of 5,000 times to 20,000 times using a scanning electron microscope.

In the present specification, the 'secondary particles' are particles formed by aggregation of primary particles.

In the present specification, the single particle is a term used to distinguish single particles from positive electrode active material particles in the form of secondary particles formed by aggregation of tens to hundreds of primary particles generally used in the related art, and is a concept including a single particle composed of one primary particle and aggregate particles of 10 or less primary particles.

In the present specification, the 'particles' may be meant to include any one or all of single particles, secondary particles, and primary particles.

A lithium secondary battery according to an exemplary embodiment of the present specification includes a positive electrode, a separator, a negative electrode, and an electrolyte, the positive electrode includes a lithium composite transition metal compound including nickel (Ni) and cobalt (Co), the negative electrode includes a mixed negative electrode active material of a silicon-based active material and a carbon-based active material, and the electrolyte includes fluoroethylene carbonate. In the exemplary embodiment, when the efficiency constants of the mixed negative electrode active material and the lithium composite transition metal compound are a and b, respectively, and the part by weight of the fluoroethylene carbonate is c based on 100 parts by weight of the electrolyte, a, b, and c satisfy the following Equation 1.

$$[\text{Equation 1}]$$

$$[(b/a)*100 - c] \leq 95.$$

The value of Equation 1 may be calculated as a value up to one decimal place.

The charge capacity and discharge capacity of the negative electrode and positive electrode active materials may be measured as follows.

First, the active material : a Super-C (trade mark) conductive material : a carboxymethyl cellulose (CMC) thickener : a styrene-butadiene rubber (SBR) binder polymer are added to water at a weight ratio of 95 : 1 : 1: 3 to prepare a slurry, and a copper foil is coated with the slurry, punched and rolled so as to have an area of 1.4875 $cm^2$, and then dried to manufacture an electrode. An electrode assembly is manufactured by using lithium metal as a counter electrode together with the electrode and interposing a polypropylene separator therebetween. After 1 M $LiPF_6$ is added to an organic solvent so as to have a concentration of 1 wt% by mixing ethylene carbonate and ethylmethyl carbonate at a volume ratio of 3:7 and adding vinylene carbonate to prepare a non-aqueous electrolyte solution, a coin half cell (CHC) is manufactured by injecting the non-aqueous electrolyte solution into the electrode assembly.

When the coin half cell (CHC) manufactured above is charged, a constant current of 0.005 V is applied at a rate of 0.2 C by a constant current constant voltage (CC-CV) method, and then the current is controlled by constant voltage at 0.005 V, and during discharge, the discharge efficiency may be measured by cutting-off at 1.5V by a constant current (CC) method at a rate of 0.2 C.

The percentage ratio of the discharge capacity and charge capacity measured using a mixed negative electrode active material as the active material, that is, [discharge capacity$_{\text{(negative electrode)}}$/charge capacity$_{\text{(negative electrode)}}$*100] may be taken as the efficiency constant a, and the percentage ratio of discharge capacity and charge capacity measured using a lithium composite transition metal compound including nickel (Ni) and cobalt (Co) as the active material, that is, [discharge capacity(positive electrode)/charge capacity(positive electrode)*100] may be taken as the efficiency constant b.

The efficiency constants of the negative electrode and positive electrode active materials may vary depending on the type and/or mixing ratio of the active materials.

The present inventors recognized that high-efficiency positive and negative materials with good charging/discharging efficiency need to be designed in order to implement the high energy density of a battery, but when a silicon-based active material having a large capacity per weight is used as a negative electrode material, there is a problem in that low efficiency induces the deterioration in the negative electrode, and accordingly, long-term service life characteristics deteriorate. Thus, the present inventors found that a silicon-based active material and a lithium-nickel-cobalt-based compound which is a single particle were used as a negative electrode active material and a positive electrode active material, respectively, and simultaneously, fluoroethylene carbonate was used as an electrolyte additive, but when a specific efficiency parameter is satisfied, the long service life can be affected by adjusting the efficiency balance between the positive electrode and the negative electrode, thereby leading to the present invention. Specifically, the above-described components included in the positive electrode, the negative electrode, and the electrolyte may satisfy Equation 1 to implement a high-energy density battery, and simultaneously improve the efficiency balance between the positive electrode and the negative electrode to significantly improve the service life characteristics.

According to an exemplary embodiment, the lithium composite transition metal compound including nickel (Ni) and cobalt (Co) may include 80 mol% or more, for example, 80 mol% or more and less than 100 mol% of nickel among the metals except for lithium. When the nickel content is high as described above, the positive electrode efficiency may be increased to implement the high energy density of a battery.

According to an exemplary embodiment, the lithium composite transition metal compound including nickel (Ni) and cobalt (Co) is a single particle.

According to an exemplary embodiment, the lithium composite transition metal compound including nickel (Ni) and cobalt (Co) may further include at least one of manganese and aluminum. The lithium composite transition metal compound may include 80 mol% or more, for example, 80 mol% or more and less than 100 mol% of nickel among metals except for lithium. Specifically, the lithium composite transition metal compound including nickel (Ni) and cobalt (Co) may be represented by the following Chemical Formula 1.

[Chemical Formula 1]     $Li_aNi_{(1-x-y)}Co_xM1_yM2_wO_2$

In Chemical Formula 1,

$1.0 \leq a \leq 1.5$, $0 \leq x \leq 0.2$, $0 \leq y \leq 0.2$, $0 \leq w \leq 0.1$, $0 \leq x+y \leq 0.2$,
M1 is at least one metal of Mn or Al, and
M2 is one or more metal elements selected from the group consisting of Ba, Ca, Zr, Ti, Mg, Ta, Nb, and Mo.

According to an exemplary embodiment, the positive electrode may include 90 parts by weight to 100 parts by weight of the lithium composite transition metal compound including nickel (Ni) and cobalt (Co) based on 100 parts by weight of the positive electrode active material.

In an exemplary embodiment of the present specification, the silicon-based active material includes at least one of $SiO_x$ $(0 \leq x < 2)$, $SiM_y$ (M is a metal, $1 \leq y \leq 4$), and Si/C. Only one type of the silicon-based active material may be included, or two or more types may be included together. When both layers of the negative electrode active material layer include a silicon-based active material, on the two layers of the active material layer, the same type of silicon-based active material may be used, and different types or combinations of silicon-based active materials may also be used. The silicon-based active material may be included in an amount of 1 part by weight or more and less than 20 parts by weight, for example, 1 part by weight to 10 parts by weight based on total 100 parts by weight of the above-described mixed negative electrode active material.

The active material including $SiO_x$ $(0 \leq x < 2)$ as the silicon-based active material may be a silicon-based composite particle including $SiO_x$ $(0 < x < 2)$ and pores.

The $SiO_x$ (0<x<2) corresponds to a matrix in the silicon-based composite particle. The $SiO_x$ (0<x<2) may be in a form including Si and $SiO_2$, and the Si may also form a phase. That is, the x corresponds to the number ratio of O for Si included in the $SiO_x$ (0<x<2). When the silicon-based composite particles include the $SiO_x$ (0<x<2), the discharge capacity of a secondary battery may be improved.

The silicon-based composite particles may further include at least one of a Mg compound and a Li compound. The Mg compound and Li compound may correspond to a matrix in the silicon-based composite particle.

The Mg compound and/or Li compound may be present inside and/or on the surface of the $SiO_x$ (0<x<2). The initial efficiency of the battery may be improved by the Mg compound and/or Li compound.

The Mg compound may include at least any one selected from the group consisting of Mg silicates, Mg silicides and Mg oxides. The Mg silicate may include at least any one of $Mg_2SiO_4$ and $MgSiO_3$. The Mg silicide may include $Mg_2Si$. The Mg oxide may include MgO.

In an exemplary embodiment of the present specification, the Mg element may be included in an amount of 0.1 wt% to 20 wt%, or 0.1 wt% to 10 wt% based on total 100 wt% of the silicon-based active material. Specifically, the Mg element may be included in an amount of 0.5 wt% to 8 wt% or 0.8 wt% to 4 wt%. When the above range is satisfied, the Mg compound may be included in an appropriate content in the silicon-based active material, so that the volume change of the silicon-based active material during the charging and discharging of a battery may be readily suppressed, and the discharge capacity and initial efficiency of the battery may be improved.

The Li compound may include at least any one selected from the group consisting of Li silicates, Li silicides and Li oxides. The Li silicate may include at least any one of $Li_2SiO_2$, $Li_4SiO_4$ and $Li_2Si_2O_5$. The Li silicide may include $Li_7Si_2$. The Li oxide may include $Li_2O$.

In an exemplary embodiment of the present invention, the Li compound may be present in the form of a lithium silicate. The lithium silicate is represented by $Li_aSi_bO_c$ (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of $Li_2SiO_3$, $Li_4SiO_4$ and $Li_2Si_2O_5$ in the silicon-containing composite particles, and the amorphous lithium silicate may be in the form of $Li_aSi_bO_c$ (2≤a≤4, 0<b≤2, 2≤c≤5), and are not limited to the forms.

In an exemplary embodiment of the present specification, the Li element may be included in an amount of 0.1 wt% to 20 wt%, or 0.1 wt% to 10 wt% based on total 100 wt% of the silicon-based active material.

Specifically, the Li element may be included in an amount of 0.5 wt% to 8 wt%, more specifically 0.5 wt% to 4 wt%. When the above range is satisfied, the Li compound may be included in an appropriate content in the silicon-based active material, so that the volume change of the negative electrode active material during the charging and discharging of a battery may be readily suppressed, and the discharge capacity and initial efficiency of the battery may be improved.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the Mg element or the Li element of the prepared silicon-based active material may be analyzed by converting the total sum so as to be the theoretical value.

In an exemplary embodiment of the present specification, a carbon layer may be provided on the surface of the silicon-based composite particles and/or inside pores. By the carbon layer, conductivity is imparted to the silicon-based composite particles, and the initial efficiency, service life characteristics, and battery capacity characteristics of a secondary battery including the negative electrode active material including the silicon-based composite particles may be improved. The total weight of the carbon layer may be included in an amount of 5 wt% to 40 wt% based on total 100 wt% of the silicon-based composite particles.

In an exemplary embodiment of the present specification, the carbon layer may include at least any one of amorphous carbon and crystalline carbon.

The silicon-based active material may have an average particle diameter ($D_{50}$) of 2 um to 15 um, specifically 3 um to 12 μm, and more specifically 4 um to 10 um. When the above range is satisfied, side reactions between the silicon-based composite particles and an electrolyte solution may be controlled, and the discharge capacity and initial efficiency of the battery may be effectively implemented.

In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

In the present specification, the silicon carbon composite is a composite of Si and C, may also be represented by a Si/C-based active material, and is distinguished from silicon carbide represented by SiC. The silicon carbon composite may be a composite of silicon, graphite, and the like, and may also form a structure in which a core of silicon and graphite composite and the like is surrounded by graphene, amorphous carbon or the like. In the silicon carbon composite, the silicon may be nano-silicon.

In an exemplary embodiment of the present specification, the carbon-based active material may be graphite, and the graphite may be natural graphite, artificial graphite, or a mixture thereof. Based on 100 parts by weight of the mixed negative electrode active material, the carbon-based active material may be included in an amount of 60 parts by weight or more and 99 parts by weight or less.

According to an exemplary embodiment, the negative electrode may include a current collector; and a negative electrode active material layer provided on the current collector.

The negative electrode active material based on 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an exemplary embodiment of the present specification, the negative electrode active material layer may further include a negative electrode binder in addition to the mixed negative electrode active material including the silicon-based active material and the carbon-based active material.

The negative electrode binder may serve to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 20 parts by weight or less, for example, preferably 0.3 parts by weight or more and 20 parts by weight or less, and more preferably 0.5 parts by weight or more and 10 parts by weight or less, based on 100 parts by weight of the negative electrode active material layer.

The negative electrode active material layer may not include a conductive material, but may further include a conductive material, if necessary. The conductive material included in the negative electrode active material layer is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 20 parts by weight, preferably 0.03 parts by weight to 18 parts by weight, based on 100 parts by weight of the negative electrode active material layer.

In an exemplary embodiment of the present specification, the negative electrode active material layer may have a thickness of 5 um or more and 500 um or less.

In an exemplary embodiment of the present application, the negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 um to 500 $\mu$m, the thickness of the current collector is not limited thereto.

In an exemplary embodiment of the present specification, the positive electrode includes a positive electrode current collector and a positive electrode active material layer formed on the positive electrode current collector and including the lithium composite transition metal compound including nickel (Ni) and cobalt (Co). The positive electrode active material layer may have a thickness of 20 um or more and 500 um or less.

The positive electrode current collector is not particularly limited as long as the collector has conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an exemplary embodiment, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional exemplary embodiment of the present specification, the positive electrode active material layer may further include a positive electrode binder and a conductive material.

The positive electrode binder may serve to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the positive electrode active material layer.

The conductive material included in the positive electrode active material layer is used to impart conductivity to the electrode, and can be used without particular limitation as long as the conductive material has electron conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Specifically, the conductive material may include one or more of a single-walled carbon nanotube (SWCNT); and a multi-walled carbon nanotube (MWCNT). The conductive material may be included in an amount of 0.1 parts by weight or more and 2 parts by weight or less, for example, preferably 0.3 parts by weight or more and 1.5 parts by weight or less, and more preferably 0.5 parts by weight or more and 1.2 parts by weight or less, based on 100 parts by weight of the composition for a positive electrode active material layer.

The positive electrode and the negative electrode may be manufactured by a method for manufacturing a positive electrode and a negative electrode in the related art, except that the aforementioned positive electrode and negative electrode active materials are used.

Specifically, after a composition for forming an active material layer, which includes the aforementioned active material and, optionally, a binder and a conductive material is applied onto current collectors, the positive electrode and negative electrode may be manufactured by drying and rolling the current collectors. In this case, the types and contents of the positive and negative electrode active materials, binders, and conductive materials are as described above. The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. The amount of solvent used is sufficient as long as the solvent in the amount dissolves or disperses the active material, conductive material and binder in consideration of the application thickness and preparation yield of the slurry, and has a viscosity capable of exhibiting excellent thickness uniformity during subsequent application for manufacturing the positive electrode and the negative electrode. Alternatively, by another method, the positive electrode and the negative electrode may be manufactured by casting the composition for forming an active material layer on a separate support and then laminating a film obtained by performing peel-off from the support on a current collector.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The above-described fluoroethylene carbonate is added to the electrolyte. Fluoroethylene carbonate may be present in the electrolyte or may be present in the form of a film on the surface of the positive electrode or the surface of the negative electrode. The fluoroethylene carbonate may be included in an amount 1 part by weight to 10 parts by weight based on 100 parts by weight of the electrolyte.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

A lithium secondary battery according to an exemplary embodiment of the present invention includes an assembly including a positive electrode, a negative electrode, a separator, and an electrolyte.

An additional exemplary embodiment of the present invention provides a battery module including the above-described lithium secondary battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary battery according to exemplary embodiments of the present invention stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**Example 1**

A copper foil having a thickness of 10 um was coated with a composition for forming a negative electrode active material layer, including a negative electrode active material including SiO and graphite (3 parts by weight of SiO based on 100 parts by weight of the negative electrode active material), a conductive material (carbon black, CNT), a binder (SBR) and a thickener (CMC) at a weight ratio of 95.6 : 1.0 : 2.3 : 1.1 so as to have a dry thickness of 140 $\mu$m, and then dried to manufacture a negative electrode.

An aluminum foil having a thickness of 15 um was coated with a composition for forming a positive electrode active material layer, including a lithium nickel-based oxide of $Li_{1.0}Ni_{0.86}Co_{0.06}Mn_{0.08}O_2$, a conductive material (CNT), and a binder (PVDF) at a weight ratio of 97 : 1 : 2 so as to have a dry thickness of 130 $\mu$m, and then dried to manufacture a positive electrode.

The positive electrode and the negative electrode were stacked with a separator interposed therebetween, and an electrolyte solution was injected to manufacture a battery. A 12-$\mu$m thick separator provided with a coating layer including Al2O3 and PVDF binder on a PE/PP/PE triple structure base film as the separator was used, and as the electrolyte solution, 1 M $LiPF_6$, ethylene carbonate (EC)/ethyl methyl carbonate (EMC) (volume ratio 3/7), and vinylene carbonate (VC)/propanesultone (PS)/fluoroethylene carbonate (FEC) (included in an amount of 3 parts by weight, 1.5 parts by weight, and 3 parts by weight, respectively, based on 100 parts by weight of the electrolyte) were used.

The values of the above-described Equation 1 for the manufactured batteries are shown in Table 1. The capacity retention rates when the manufactured battery was charged and discharged for 200 cycles at a specific temperature are shown in the following Table 2.

**Comparative Example 1**

The procedure was performed in the same manner as in Example 1, except that SiO was included in an amount of 10 parts by weight based on 100 parts by weight of the negative electrode active material.

**Comparative Example 2**

The procedure was performed in the same manner as in Comparative Example 1, except that fluoroethylene carbonate was not added to the electrolyte solution.

The efficiency constant of the electrode active material used in the batteries manufactured in Examples and Comparative Examples, the content of additive (fluoroethylene carbonate), and the value of Equation 1 are shown in the following Table 1.

[Table 1]

|  | a | b | c | Value of Equation 1 [(b/a)*100 - c] $\leq$ 95 |
|---|---|---|---|---|
| Example 1 | 91 | 89 | 3 | 94.8 |
| Comparative Example 1 | 88 | 89 | 3 | 98.1 |
| Comparative Example 2 | 88 | 89 | 0 | 101.1 |

For the batteries manufactured in Examples and Comparative Examples, the number of cycles reaching 80% of the initial capacity by performing a cycle of constant current/constant voltage (CC/CV) charging (0.05 C-cut) at 0.33 C to 4.2 V and 0.5 C constant current (CC) discharging (2.5 V-cut) at room temperature (25°C) is shown in the following Table 2.

[Table 2]

|  | Experimental Temperature (°C) | Capacity retention rate (%) | The number of cycles reaching 80% of capacity |
|---|---|---|---|
| Example 1 | 25 | 80 | 600 |
| Comparative Example 1 | 25 | 80 | 200 |
| Comparative Example 2 | 25 | 80 | 50 |

As shown in Table 2 above, it could be confirmed that the number of cycles for the batteries in the Examples to reach 80% of the capacity was much greater than that for the batteries in the Comparative Examples.

**Claims**

1. A lithium secondary battery comprising a positive electrode, a separator, a negative electrode, and an electrolyte,

   wherein the positive electrode includes a lithium composite transition metal compound comprising nickel (Ni) and cobalt (Co),
   the negative electrode includes a mixed negative electrode active material of a silicon-based active material and a carbon-based active material,
   the electrolyte includes fluoroethylene carbonate, and
   when the efficiency constants of the mixed negative electrode active material and the lithium composite transition metal compound are a and b, respectively, and the part by weight of the fluoroethylene carbonate is c based on 100 parts by weight of the electrolyte, a, b, and c satisfy the following Equation 1:

   [Equation 1]

   $$[(b/a)*100 - c] \leq 95.$$

2. The lithium secondary battery of claim 1, wherein the lithium composite transition metal compound comprising nickel (Ni) and cobalt (Co) comprises 80 mol% or more of nickel among the metals except for lithium.

3. The lithium secondary battery of claim 1, wherein the lithium composite transition metal compound comprising nickel (Ni) and cobalt (Co) is a single particle.

4. The lithium secondary battery of claim 1, wherein the lithium composite transition metal compound comprising nickel (Ni) and cobalt (Co) is represented by the following Chemical Formula 1:

   [Chemical Formula 1]     $Li_aNi_{(1-x-y)}Co_xM1_yM2_wO_2$

   in Chemical Formula 1,

   $1.0 \leq a \leq 1.5$, $0 \leq x \leq 0.2$, $0 \leq y \leq 0.2$, $0 \leq w \leq 0.1$, $0 \leq x+y \leq 0.2$,
   M1 is at least one metal of Mn or Al, and
   M2 is one or more metal elements selected from the group consisting of Ba, Ca, Zr, Ti, Mg, Ta, Nb, and Mo.

5. The lithium secondary battery of claim 1, wherein the positive electrode comprises 90 parts by weight to 100 parts by weight of the lithium composite transition metal compound comprising nickel (Ni) and cobalt (Co) based on 100 parts by weight of the positive electrode active material.

6. The lithium secondary battery of claim 1, wherein the silicon-based active material comprises at least one of $SiO_x$ ($0 \leq x < 2$), $SiM_y$ (M is a metal, $1 \leq y \leq 4$), and Si/C.

7. The lithium secondary battery of claim 1, wherein the silicon-based active material is comprised in an amount of 1 part by weight or more and less than 20 parts by weight based on 100 parts by weight of the mixed negative electrode active material.

8. The lithium secondary battery of claim 1, wherein the fluoroethylene carbonate is comprised in an amount of 1 part by weight to 10 parts by weight based on 100 parts by weight of the electrolyte.

<div align="center">

**INTERNATIONAL SEARCH REPORT**

</div>

| | International application No. |
|---|---|
| | **PCT/KR2023/015575** |

| | |
|---|---|
| **A.** | **CLASSIFICATION OF SUBJECT MATTER** |

**H01M 10/052**(2010.01)i; **H01M 4/36**(2006.01)i; **H01M 4/48**(2010.01)i; **H01M 4/38**(2006.01)i; **H01M 4/587**(2010.01)i; **H01M 4/525**(2010.01)i; **H01M 4/505**(2010.01)i; **H01M 10/0567**(2010.01)i

According to International Patent Classification (IPC) or to both national classification and IPC

| | |
|---|---|
| **B.** | **FIELDS SEARCHED** |

Minimum documentation searched (classification system followed by classification symbols)

H01M 10/052(2010.01); H01M 10/0567(2010.01); H01M 10/0569(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 플루오로에틸렌카보네이트 전해질 (fluoroethylene carbonate electrolyte), 효율 상수(efficiency constant), 실리콘계 활물질(silicone-based active material)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2020-0114267 A (HYUNDAI MOTOR COMPANY et al.) 07 October 2020 (2020-10-07)<br>See paragraphs [0039]-[0041], [0044]-[0046], [0054], [0062] and [0074]; and claim 1. | 1-8 |
| A | KR 10-2020-0092897 A (LG CHEM, LTD.) 04 August 2020 (2020-08-04)<br>See entire document. | 1-8 |
| A | KR 10-2020-0047199 A (SAMSUNG ELECTRONICS CO., LTD. et al.) 07 May 2020 (2020-05-07)<br>See entire document. | 1-8 |
| A | KR 10-2020-0073531 A (HYUNDAI MOTOR COMPANY et al.) 24 June 2020 (2020-06-24)<br>See entire document. | 1-8 |
| A | JP 6966586 B2 (SAMSUNG SDI CO., LTD. et al.) 17 November 2021 (2021-11-17)<br>See entire document. | 1-8 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 January 2024** | **26 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/015575** |

| Patent document cited in search report | | | Publication date (day/month/year) | Patent family member(s) | | | Publication date (day/month/year) |
| --- | --- | --- | --- | --- | --- | --- | --- |
| KR | 10-2020-0114267 | A | 07 October 2020 | CN | 111755750 | A | 09 October 2020 |
| | | | | US | 11205801 | B2 | 21 December 2021 |
| | | | | US | 2020-0313235 | A1 | 01 October 2020 |
| KR | 10-2020-0092897 | A | 04 August 2020 | | None | | |
| KR | 10-2020-0047199 | A | 07 May 2020 | CN | 111106342 | A | 05 May 2020 |
| | | | | EP | 3644418 | A1 | 29 April 2020 |
| | | | | EP | 3644418 | B1 | 10 August 2022 |
| | | | | JP | 2020-068212 | A | 30 April 2020 |
| | | | | US | 11527773 | B2 | 13 December 2022 |
| | | | | US | 2020-0136174 | A1 | 30 April 2020 |
| KR | 10-2020-0073531 | A | 24 June 2020 | CN | 111326798 | A | 23 June 2020 |
| | | | | US | 11450887 | B2 | 20 September 2022 |
| | | | | US | 2020-0194836 | A1 | 18 June 2020 |
| JP | 6966586 | B2 | 17 November 2021 | CN | 111554976 | A | 18 August 2020 |
| | | | | EP | 3696901 | A1 | 19 August 2020 |
| | | | | JP | 2020-136271 | A | 31 August 2020 |
| | | | | KR | 10-2020-0098335 | A | 20 August 2020 |
| | | | | US | 2020-0259209 | A1 | 13 August 2020 |

Form PCT/ISA/210 (patent family annex) (July 2022)

**REFERENCES CITED IN THE DESCRIPTION**

**Patent documents cited in the description**

- KR 1020220131734